(19) **Europäisches Patentamt**
**European Patent Office**
**Office européen des brevets**

(11) **EP 4 507 152 B1**

(12) # EUROPEAN PATENT SPECIFICATION

(45) Date of publication and mention
of the grant of the patent:
**04.02.2026 Bulletin 2026/06**

(21) Application number: **23866603.6**

(22) Date of filing: **20.12.2023**

(51) International Patent Classification (IPC):
$H02J\ 3/38^{(2026.01)}$    $H02J\ 3/00^{(2026.01)}$
$H02J\ 3/12^{(2026.01)}$    $G06Q\ 50/06^{(2024.01)}$
$H02J\ 13/00^{(2026.01)}$

(52) Cooperative Patent Classification (CPC):
**H02J 3/381; G06Q 50/06; H02J 13/00002;**
H02J 2300/20; H02J 2300/40; Y02E 40/30

(86) International application number:
**PCT/CN2023/140332**

(87) International publication number:
**WO 2024/259925 (26.12.2024 Gazette 2024/52)**

(54) **METHOD AND APPARATUS FOR DETERMINING VOLTAGE SUPPORT STRENGTH OF NEW-ENERGY POWER SYSTEM IN REAL TIME, AND DEVICE, STORAGE MEDIUM AND COMPUTER PROGRAM PRODUCT**

VERFAHREN UND VORRICHTUNG ZUR BESTIMMUNG DER SPANNUNGSUNTERSTÜTZUNGSSTÄRKE EINES NEUENERGIE-STROMSYSTEMS IN ECHTZEIT SOWIE VORRICHTUNG, SPEICHERMEDIUM UND COMPUTERPROGRAMMPRODUKT

PROCÉDÉ ET APPAREIL POUR DÉTERMINER UNE FORCE DE SUPPORT DE TENSION D'UN SYSTÈME D'ALIMENTATION EN ÉNERGIE NOUVELLE EN TEMPS RÉEL, ET DISPOSITIF, SUPPORT DE STOCKAGE ET PRODUIT-PROGRAMME INFORMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **20.06.2023 CN 202310728273**

(43) Date of publication of application:
**12.02.2025 Bulletin 2025/07**

(73) Proprietor: **China Electric Power Research Institute**
**Beijing 100192 (CN)**

(72) Inventors:
• **SUN, Huadong**
**Beijing 100192 (CN)**
• **YU, Lin**
**Beijing 100192 (CN)**
• **XU, Shiyun**
**Beijing 100192 (CN)**
• **PENG, Long**
**Beijing 100192 (CN)**
• **WANG, Hongfu**
**Beijing 100192 (CN)**
• **ZHAO, Bing**
**Beijing 100192 (CN)**
• **XI, Gongwei**
**Beijing 100192 (CN)**

(74) Representative: **White, Andrew John et al**
**Mathys & Squire**
**The Shard**
**32 London Bridge Street**
**London SE1 9SG (GB)**

(56) References cited:
CN-A- 111 507 572    CN-A- 113 904 375
CN-A- 115 829 264    CN-A- 115 829 264
CN-A- 116 454 981    US-A1- 2013 066 480

**Description**

TECHNICAL FIELD

The present invention relates to but is not limited to the field of power system security analysis, in particular to a method, and apparatus for determining voltage support strength of a renewable energy power system in real time, a computer-readable storage medium and a computer program product.

BACKGROUND

With the integration of wind power plants, photovoltaic plants and other renewable energy plants into the traditional power network, a renewable energy power system has been gradually formed. Due to the regional and seasonal imbalance of wind power resources and photoelectric resources, the consumption, energy storage and transmission of wind power resources and photoelectric resources in the renewable energy power system have increasingly become obstacles restricting the renewable energy power system in development and exerting potential. If the system cannot provide enough voltage support, large-scale safe and reliable power transmission of renewable energy cannot be realized. It is required to monitor voltage support strength at key points of the renewable energy system in real time, and pay attention to voltage support strength provided by the system, so as to ensure the transmission scale of the renewable energy within a safe range.

The output of the renewable energy has the characteristics of randomness and fluctuation, which leads to the complex and changeable operation mode of the power system, and further increases the difficulty in real-time monitoring of voltage support strength of the system. At present, the voltage support strength of the system is analyzed by calculating a short circuit ratio of a terminal bus of a renewable energy unit or a short circuit ratio of a bus of a renewable energy plant. The short circuit ratio is calculated by offline data. The short circuit ratio cannot be measured in real time based on local real-time measurement information. The real-time measurement of the short circuit ratio has great hysteresis in time. After the output level of the renewable energy changes or a system is disturbed, operators cannot obtain the present short circuit ratio of the system in a timely manner, and cannot analyze the voltage support strength of the system, thus being unable to provide reference for optimization and adjustment for control strategy in a timely manner.

Background may be found in CN 115 829 264 A (CHINA ELECTRIC POWER RES INST CO LTD) 21 March 2023 and CN 113 904 375 A (CHINA ELECTRIC POWER RES INST CO LTD) 07 January 2022.

SUMMARY

The present invention is defined in the appended independent claims. Advantageous features are set out in the appended dependent claims.

The present invention proposes a method and apparatus for determining voltage support strength of a renewable energy power system in real time, a computer-readable storage medium and a computer program product.

According to the method, apparatus and device for determining the voltage support strength of the renewable energy power system in real time, the storage medium and the computer program product, a bus real-time operating voltage and a collection line current of a monitoring point of the renewable energy power system are collected; a system's Thevenin equivalent potential of the monitoring point is calculated according to the bus real-time operating voltage and the collection line current; a short circuit ratio of the monitoring point and a critical short circuit ratio of the monitoring point are calculated according to a nominal voltage of the monitoring point, the system's Thevenin equivalent potential and the bus real-time operating voltage; a safety margin of the short circuit ratio of the monitoring point is calculated according to the short circuit ratio of the monitoring point and the critical short circuit ratio of the monitoring point; and a strength division result of the voltage support strength of the renewable energy power system is determined according to the safety margin of the short circuit ratio of the monitoring point and a set voltage support strength division criterion. According to the method, voltage support strength of the system is evaluated through the electrical quantities collected by a power system measuring apparatus in real time, and the related electrical quantities only include a bus operation voltage of the monitoring point, the collection line current, a rated voltage of the renewable energy plant and a rated voltage of the renewable energy unit, thus greatly reducing the number of electrical parameters involved in the calculation of the short circuit ratio, improving algorithm efficiency and realizing real-time monitoring of the voltage support strength of the system.

BRIEF DESCRIPTION OF THE DRAWINGS

Exemplary embodiments of the present invention may be more fully understood by reference to the following drawings.

FIG. 1 illustrates a flowchart of a method for determining voltage support strength of a renewable energy power system in real time according to a preferred embodiment of the present invention.

FIG. 2 illustrates a structural diagram of an apparatus for determining voltage support strength of a renewable energy power system in real time according to a preferred embodiment of the present invention.

DETAILED DESCRIPTION

Exemplary embodiments of the present invention are now described with reference to the accompanying drawings. However, the present invention may be embodied in many different forms and is not limited to the embodiments described herein, which are provided to disclose the present invention in detail and completely, and to fully convey the scope of the present invention to those skilled in the art. Terms referred to in the exemplary embodiments in the drawings are not limiting to the present invention. In the drawings, the same reference numerals are used for the same units/elements.

Unless otherwise stated, terms (including technical terms) used herein have a common understanding meaning to those skilled in the art to which they pertain. In addition, it is understandable that terms defined in commonly used dictionaries should be understood to have meanings consistent with the context of their related fields, and should not be understood as having idealistic meanings or overly formal meanings.

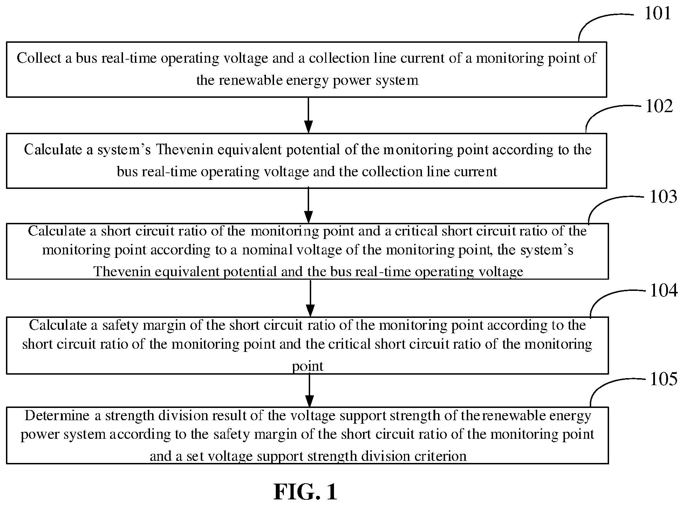

FIG. 1 illustrates a flowchart of a method for determining voltage support strength of a renewable energy power system in real time according to a preferred embodiment of the present invention. As illustrated in FIG. 1, the method for determining the voltage support strength of the renewable energy power system in real time according to the present preferred embodiment starts from an operation 101.

In the operation 101, a bus real-time operating voltage and a collection line current of a monitoring point of the renewable energy power system are collected. The renewable energy power system includes at least one renewable energy plant, and each renewable energy plant includes at least one renewable energy unit. The monitoring point is a bus of a renewable energy plant or a terminal bus of a renewable energy unit.

There may be one or more monitoring points of the renewable energy power system in the present invention. When there are multiple monitoring points, the multiple monitoring points can be numbered, and the calculation is performed on the multiple numbered monitoring points in sequence according to the technical solutions for obtaining the short circuit ratio, the critical short circuit ratio and the safety margin of the short circuit ratio according to the preferred embodiment. When a safety margin of a short circuit ratio of any one of the multiple monitoring points meets the set voltage support strength division criterion, the strength division result of the voltage support strength of the renewable energy power system can be determined.

In an operation 102, a system's Thevenin equivalent potential of the monitoring point is calculated according to the bus real-time operating voltage and the collection line current.

Preferably, a system's Thevenin equivalent potential of the monitoring point is calculated according to the bus real-time operating voltage and the collection line current, and a calculation formula of the system's Thevenin equivalent potential is shown as the formula (1):

$$\dot{E}_t = \frac{\dot{U}_t \dot{I}_{t-1} - \dot{U}_{t-1} \dot{I}_t}{\dot{I}_{t-1} - \dot{I}_t} \tag{1}$$

In the formula, $\dot{U}_t$ is a bus operating voltage of the monitoring point at a moment t, $\dot{U}_{t-1}$ is a bus operating voltage of the monitoring point at a moment t-1, $\dot{I}_t$ is a collection line current of the monitoring point at the moment t, $\dot{I}_{t-1}$ is a collection line current of the monitoring point at the moment t-1, and Et is a system's Thevenin equivalent potential of the monitoring point at the moment t.

In the preferred embodiment, for the bus operating voltage $\dot{U}_{t-1}$ of the monitoring point collected at the moment t-1 and the collection line current $\dot{I}_{t-1}$ of the monitoring point collected at the moment t-1, a result of the formula (2) can be obtained according to a calculation formula of a system bus voltage:

$$\dot{U}_{t-1} = \dot{E}_{t-1} + Z_{t-1} \dot{I}_{t-1} \tag{2}$$

In the formula, $\dot{E}_{t-1}$ is a system's Thevenin equivalent potential of the monitoring point at the moment t-1, and $Z_{t-1}$ is a system's Thevenin equivalent impedance of the monitoring point at the moment t-1.

Similarly, for the bus operating voltage $\dot{U}_t$ of the monitoring point collected at the moment t and the collection line current $\dot{I}_t$ of the monitoring point collected at the moment t, a result of the formula (3) can be obtained according to the calculation formula of the system bus voltage:

$$\dot{U}_t = \dot{E}_t + Z_t \dot{I}_t \qquad (3)$$

In the formula, Et is a system's Thevenin equivalent potential of the monitoring point at the moment t, and $Z_t$ is a system's Thevenin equivalent impedance of the monitoring point at the moment t.

When renewable energy output of the renewable energy power system fluctuates, the system's Thevenin equivalent potential and the system's Thevenin equivalent impedance can be approximately regarded as unchanged, and the formula (4) and the formula (5) can be obtained:

$$\dot{E}_t = \dot{E}_{t-1} \qquad (4)$$

$$Z_t = Z_{t-1} \qquad (5)$$

Therefore, according to the simultaneous solution of the above four formulas, the calculation formula (6) for solving the system's Thevenin equivalent potential of the monitoring point at the moment t described in the embodiment can be obtained:

$$\dot{E}_t = \frac{\dot{U}_t \dot{I}_{t-1} - \dot{U}_{t-1} \dot{I}_t}{\dot{I}_{t-1} - \dot{I}_t} \qquad (6)$$

In an operation 103, a short circuit ratio of the monitoring point and a critical short circuit ratio of the monitoring point are calculated according to a nominal voltage of the monitoring point, the system's Thevenin equivalent potential and the bus real-time operating voltage.

Preferably, a short circuit ratio of the monitoring point and a critical short circuit ratio of the monitoring point are calculated according to a nominal voltage of the monitoring point, the system's Thevenin equivalent potential and the bus real-time operating voltage, and a calculation formula of the short circuit ratio of the monitoring point and a calculation formula of the critical short circuit ratio of the monitoring point are shown as the formula (7) and the formula (8), respectively:

$$\text{SCR-U}_t = \frac{U_N \cdot E_t}{U_t \cdot |\dot{U}_t - \dot{E}_t|} \qquad (7)$$

$$\text{CSCR-U}_t = \frac{U_N E_t}{U_t^2} \qquad (8)$$

In the formulas SCR-Ut is a short circuit ratio of the monitoring point at a moment t, and CSCR-Ut is a critical short circuit ratio of the monitoring point at the moment t. Et is a system's Thevenin equivalent potential of the monitoring point at the moment t. Et is a modulus value of the system's Thevenin equivalent potential of the monitoring point at the moment t. $\dot{U}_t$ is a bus operating voltage of the monitoring point at the moment t. Ut is a modulus value of the bus operating voltage of the monitoring point at the moment t. $U_N$ is the nominal voltage of the monitoring point. When the monitoring point is a bus of a renewable energy plant, a value of $U_N$ is a rated voltage of a voltage class corresponding to the renewable energy plant, and when the monitoring point is a terminal bus of a renewable energy unit in a renewable energy plant, the value of $U_N$ is a rated voltage of the renewable energy unit.

The real-time calculation method of the critical short circuit ratio provided by the embodiment of the present invention provides a stable criterion for judging the safety margin of the voltage support strength of the system.

In the preferred embodiment, the monitoring point can not only be a bus of a renewable energy plant, but also a terminal bus of a renewable energy unit in a renewable energy plant. Therefore, a nominal voltage of the monitoring point is assigned with different values according to the above two different situations. When the monitoring point is a bus of renewable energy plant, a value of the nominal voltage is a rated voltage of a voltage class corresponding to the renewable energy plant, such as 35kV, 110kV, 220kV, 330kV, etc. When the monitoring point is a terminal bus of a renewable energy unit, a value of the nominal voltage is a rated device voltage, such as 0.4 kV, 0.69 kV, etc.

In an operation 104, a safety margin of the short circuit ratio of the monitoring point is calculated according to the short circuit ratio of the monitoring point and the critical short circuit ratio of the monitoring point.

Preferably, a safety margin of the short circuit ratio of the monitoring point is calculated according to the short circuit ratio of the monitoring point and the critical short circuit ratio of the monitoring point, and a calculation formula of the safety margin of the short circuit ratio of the monitoring point is shown as the formula (9):

$$Mg_t = \frac{SCR\text{-}U_t - CSCR\text{-}U_t}{SCR\text{-}U_t} \times 100 \qquad (9)$$

In the formula, Mgt is the safety margin of the short circuit ratio of the monitoring point, which is expressed as a percentage and is dimensionless. SCR-Ut is a short circuit ratio of the monitoring point at a moment t. CSCR-Ut is a critical short circuit ratio of the monitoring point at the moment t.

In an operation 105, a strength division result of the voltage support strength of the renewable energy power system is determined according to the safety margin of the short circuit ratio of the monitoring point and a set voltage support strength division criterion.

Preferably, a strength division result of the voltage support strength of the renewable energy power system is determined according to the safety margin of the short circuit ratio of the monitoring point and a set voltage support strength division criterion, and the voltage support strength division criterion includes followings.

In response to $Mg_t < K_1$, it is determined that the renewable energy power system is a system with weak voltage support strength, where $K_1$ is a safety margin of the short circuit ratio of the monitoring point determined through calculation when an operating voltage becomes lower than a voltage threshold $K_4$ via low voltage ride through for an operating condition where reactive power compensation of the renewable energy power system is $K_3$, $0 < K_1, K_3, K_4 < 1$.

In response to $K_1 \leq Mg_t < K_2$, it is determined that the renewable energy power system is a system with medium voltage support strength, where $K_2$ is a safety margin of the short circuit ratio of the monitoring point determined through calculation when renewable energy active power output reaches $K_5$ of transmission capacity of the renewable energy power system for an operating condition where reactive power compensation of the renewable energy power system is $K_3$, $0 < K_2, K_5 < 1$.

In response to $Mg_t \geq K_2$, it is determined that the renewable energy power system is a system with strong voltage support strength.

The voltage support strength division criterion provided by the embodiment of the present invention provides technical support for strength division of the voltage support strength.

In the preferred embodiment, when $K_3$=15% and $K_4$=0. 9p. u, $K_1$=22% can be obtained according to the calculation formula for calculating the short circuit ratio, the critical short circuit ratio and the safety margin of the short circuit ratio. In the same way, when $K_3$=15% and $K_5$=80%, $K_2$=32% can be obtained according to the calculation formulas for calculating the short circuit ratio, the critical short circuit ratio and safety margin of the short circuit ratio. Therefore, the criterion for judging strength of the voltage support strength of the renewable energy power system based on the safety margins of the short circuit ratio $K_1$=22% and $K_2$=32% are as follows.

In response to Mgt < 22%, it is determined that the renewable energy power system is a system with weak voltage support strength.

In response to 22% ≤ Mgt < 32%, it is determined that the renewable energy power system is a system with medium voltage support strength.

In response to $Mg_t \geq 32\%$, it is determined that the renewable energy power system is a system with strong voltage support strength.

According to the method for determining the voltage support strength of the renewable energy power system according to the preferred embodiment, the short circuit ratio and the critical short circuit ratio can be obtained based on the bus real-time operating voltage and the collection line current of the monitoring point of the renewable energy power system collected in real time, and the technical solution of determining the voltage support strength of the system by determining the safety margin of the short circuit ratio of the system according to the obtained short circuit ratio and the critical short circuit ratio is provided. The method involves few electrical parameters in real time calculation of the voltage support strength of the renewable energy power system, has fast speed of calculation, and has high real-time performance and practicability.

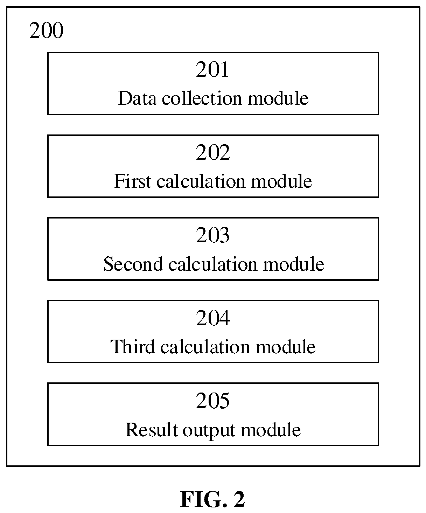

FIG. 2 illustrates a structural diagram of an apparatus for determining voltage support strength of a renewable energy power system in real time according to a preferred embodiment of the present invention. As illustrated in FIG. 2, the apparatus 200 for determining the voltage support strength of the renewable energy power system in real time according to the present preferred embodiment includes a data collection module 201, a first calculation module 202, a second calculation module 203, a third calculation module 204 and a result output module 205.

The data collection module 201 is configured to collect a bus real-time operating voltage and a collection line current of a monitoring point of the renewable energy power system. The renewable energy power system includes at least one renewable energy plant, and each renewable energy plant includes at least one renewable energy unit. The monitoring point is a bus of a renewable energy plant or a terminal bus of a renewable energy unit.

The first calculation module 202 is configured to calculate a system's Thevenin equivalent potential of the monitoring point according to the bus real-time operating voltage and the collection line current.

The second calculation module 203 is configured to calculate a short circuit ratio of the monitoring point and a critical short circuit ratio of the monitoring point according to a nominal voltage of the monitoring point, the system's Thevenin equivalent potential and the bus real-time operating voltage.

The third calculation module 204 is configured to calculate a safety margin of the short circuit ratio of the monitoring point according to the short circuit ratio of the monitoring point and the critical short circuit ratio of the monitoring point.

The result output module 205 is configured to determine a strength division result of the voltage support strength of the renewable energy power system according to the safety margin of the short circuit ratio of the monitoring point and a set voltage support strength division criterion.

Preferably, the first calculation module 202 calculates a system's Thevenin equivalent potential of the monitoring point according to the bus real-time operating voltage and the collection line current, and a calculation formula of the system's Thevenin equivalent potential is shown as the formula (10):

$$\dot{E}_t = \frac{\dot{U}_t \dot{I}_{t-1} - \dot{U}_{t-1} \dot{I}_t}{\dot{I}_{t-1} - \dot{I}_t} \qquad (10)$$

In the formula, $\dot{U}_t$ is a bus operating voltage of the monitoring point at a moment t. $\dot{U}_{t-1}$ is a bus operating voltage of the monitoring point at a moment t-1. $\dot{I}_t$ is a collection line current of the monitoring point at the moment t. $\dot{I}_{t-1}$ is a collection line current of the monitoring point at the moment t-1. $\dot{E}_t$ is a system's Thevenin equivalent potential of the monitoring point at the moment t.

Preferably, the second calculation module 203 calculates a short circuit ratio of the monitoring point and a critical short circuit ratio of the monitoring point according to a nominal voltage of the monitoring point, the system's Thevenin equivalent potential and the bus real-time operating voltage, and calculation formulas of the short circuit ratio of the monitoring point and the critical short circuit ratio of the monitoring point are shown as the formula (11) and the formula (12), respectively:

$$\text{SCR-U}_t = \frac{U_N \cdot E_t}{U_t \cdot |\dot{U}_t - \dot{E}_t|} \qquad (11)$$

$$\text{CSCR-U}_t = \frac{U_N E_t}{U_t^2} \qquad (12)$$

In the formulas, SCR-Ut is a short circuit ratio of the monitoring point at a moment t. CSCR-Ut is a critical short circuit ratio of the monitoring point at the moment t. $\dot{E}_t$ is a system's Thevenin equivalent potential of the monitoring point at the moment t. Et is a modulus value of the system's Thevenin equivalent potential of the monitoring point at the moment t. $\dot{U}_t$ is a bus operating voltage of the monitoring point at the moment t. $U_t$ is a modulus value of the bus operating voltage of the monitoring point at the moment t. $U_N$ is the nominal voltage of the monitoring point. When the monitoring point is a bus of a renewable energy plant, a value of $U_N$ is a rated voltage of a voltage class corresponding to the renewable energy plant, and when the monitoring point is a terminal bus of a renewable energy unit in a renewable energy plant, the value of $U_N$ is a rated voltage of the renewable energy unit.

Preferably, the third calculation module 204 calculates a safety margin of the short circuit ratio of the monitoring point according to the short circuit ratio of the monitoring point and the critical short circuit ratio of the monitoring point, and a calculation formula of the safety margin of the short circuit ratio of the monitoring point is shown as formula (13):

$$\text{Mg}_t = \frac{\text{SCR-U}_t - \text{CSCR-U}_t}{\text{SCR-U}_t} \times 100 \qquad (13)$$

In the formula, Mgt is the safety margin of the short circuit ratio of the monitoring point, which is expressed as a percentage and is dimensionless. SCR-Ut is a short circuit ratio of the monitoring point at a moment t. CSCR-Ut is a critical short circuit ratio of the monitoring point at the moment t.

Preferably, the result output module 205 determines a strength division result of the voltage support strength of the renewable energy power system according to the safety margin of the short circuit ratio of the monitoring point and a set voltage support strength division criterion, and the voltage support strength division criterion includes followings.

In response to Mgt < $K_1$, it is determined that the renewable energy power system is a system with weak voltage support strength, where $K_1$ is a safety margin of the short circuit ratio of the monitoring point determined through calculation when an operating voltage becomes lower than a voltage threshold $K_4$ via low voltage ride through for an operating condition where reactive power compensation of the renewable energy power system is $K_3$, $0 < K_1, K_3, K_4 < 1$.

In response to $K_1 \leq Mg_t < K_2$, it is determined that the renewable energy power system is a system with medium voltage support strength, where $K_2$ is a safety margin of the short circuit ratio of the monitoring point determined through calculation when renewable energy active power output reaches $K_5$ of transmission capacity of the renewable energy power system for an operating condition where reactive power compensation of the renewable energy power system is $K_3$, $0 < K_2$, $K_5 < 1$.

In response to $Mg_t \geq K_2$, it is determined that the renewable energy power system is a system with strong voltage support strength.

Operations of determining the voltage support strength of the renewable energy power system based on electrical parameters collected from the monitoring point in real time performed by the apparatus for determining the voltage support strength of the renewable energy power system according to the preferred embodiment are the same as the operations taken by the method for determining the voltage support strength of the renewable energy power system according to the present invention, and achieve the same technical effect as that of the operations taken by the method. Details are not repeated here.

An embodiment not being part of the present invention further provides a device for determining voltage support strength of a renewable energy power system in real time, including a memory and a processor. The memory stores a computer program executable on the processor, and the processor executes the computer program, to perform some or all of operations for implementing the method.

An embodiment of the present invention further provides a computer-readable storage medium having stored thereon a computer program that, when executed by a processor, causes the processor to perform some or all of operations for implementing the method. The computer-readable storage medium may be a transitory computer-readable storage medium or a non-transitory computer-readable storage medium.

An embodiment of the present invention further provides a computer program including computer-readable code that, when running in a device, causes a processor in the device to perform some or all of operations for implementing the method.

An embodiment of the present invention further provides a computer program product including a non-transitory computer-readable storage medium storing a computer program that, when read and executed by a computer, causes the computer to perform some or all of operations for implementing the method. The computer program product can be implemented specifically by hardware, software or a combination thereof. In some embodiments, the computer program product is embodied as a computer storage medium, and in some other embodiments, the computer program product is embodied as a software product, such as a Software Development Kit (SDK), etc.

The present invention has been described with reference to a few embodiments. However, as is well known to those skilled in the art, as defined by the appended claims, other embodiments other than those disclosed above fall equivalently within the scope of the present invention.

Generally, all terms used in the claims are construed according to their ordinary meanings in the art unless otherwise expressly defined therein. All references to "one/said/the device, component, etc." are openly interpreted as at least one example of the apparatus, component, etc. unless otherwise expressly stated. The operations of any of the methods disclosed here need not be run in the exact order disclosed unless explicitly stated.

Those skilled in the art will appreciate that the embodiment of the present invention may be provided as a method, a system or a computer program product. Accordingly, the present invention may take the form of an entirely hardware embodiment, an entirely software embodiment or an embodiment combining software and hardware aspects. Further, the present invention may take the form of a computer program product implemented on one or more computer-usable storage media (including, but not limited to, disk storage, Compact Disc Read-only Memories (CD-ROMs), optical memories, etc.) containing computer-usable program code therein.

The present invention is described with reference to flowcharts and/or block diagrams of the method, the apparatus (systems) and the computer program product according to the embodiments of the present invention. It should be understood that each flow and/or block in the flowchart and/or block diagram, as well as a combinations of flows and/or blocks in the flowchart and/or block diagram, may be implemented by computer program instructions. These computer program instructions may be provided to a processor of a general purpose computer, a special purpose computer, an embedded processor, or other programmable data processing devices to generate a machine, such that instructions executed by the processor of the computer or other programmable data processing devices generate means for performing the functions specified in one or more flows of the flowchart and/or one or more blocks of the block diagram.

These computer program instructions may also be stored in a computer-readable memory capable of directing a computer or other programmable data processing devices to operate in a specific manner, such that the instructions stored in the computer-readable memory produce a manufacture including instruction means that perform the functions specified in one or more flows of the flowchart and/or one or more blocks of the block diagram.

These computer program instructions may also be installed onto a computer or other programmable data processing devices, such that a series of operational steps are executed on the computer or other programmable devices to produce computer-implemented processing, such that the instructions executed on the computer or other programmable devices provide operations for realizing the functions specified in one or more flows of the flowchart and/or one or more blocks of the block diagram.

**EP 4 507 152 B1**

Finally, it should be noted that the above embodiments are intended only to illustrate the technical solutions of the present invention and not to limit the technical solutions of the present invention. Although the present invention has been described in detail with reference to the above embodiments, it should be understood by those of ordinary skill in the art that modifications or equivalents may be made to the specific embodiments of the present invention, and any modifications or equivalents not departing from the spirit and scope of the present invention should be covered within the scope of protection of the claims of the present invention.

An embodiment of the present invention further provides a computer program product including a non-transitory computer-readable storage medium storing a computer program that, when read and executed by a computer, causes the computer to perform some or all of operations for implementing the method. The computer program product can be implemented specifically by hardware, software or a combination thereof. In some embodiments, the computer program product is embodied as a computer storage medium, and in some other embodiments, the computer program product is embodied as a software product, such as a Software Development Kit (SDK), etc.

The present invention has been described with reference to a few embodiments. However, as is well known to those skilled in the art, as defined by the appended claims, other embodiments other than those disclosed above fall equivalently within the scope of the present invention.

Generally, all terms used in the claims are construed according to their ordinary meanings in the art unless otherwise expressly defined therein. All references to "one/said/the device, component, etc." are openly interpreted as at least one example of the apparatus, component, etc. unless otherwise expressly stated. The operations of any of the methods disclosed here need not be run in the exact order disclosed unless explicitly stated.

Those skilled in the art will appreciate that the embodiment of the present invention may be provided as a method, a systems or a computer program product. Accordingly, the present invention may take the form of an entirely hardware embodiment, an entirely software embodiment or an embodiment combining software and hardware aspects. Further, the present invention may take the form of a computer program product implemented on one or more computer-usable storage media (including, but not limited to, disk storage, Compact Disc Read-only Memories (CD-ROMs), optical memories, etc.) containing computer-usable program code therein.

The present invention is described with reference to flowcharts and/or block diagrams of the method, the apparatus (systems) and the computer program product according to the embodiments of the present invention. It should be understood that each flow and/or block in the flowchart and/or block diagram, as well as a combinations of flows and/or blocks in the flowchart and/or block diagram, may be implemented by computer program instructions. These computer program instructions may be provided to a processor of a general purpose computer, a special purpose computer, an embedded processor, or other programmable data processing devices to generate a machine, such that instructions executed by the processor of the computer or other programmable data processing devices generate means for performing the functions specified in one or more flows of the flowchart and/or one or more blocks of the block diagram.

These computer program instructions may also be stored in a computer-readable memory capable of directing a computer or other programmable data processing devices to operate in a specific manner, such that the instructions stored in the computer-readable memory produce a manufacture including instruction means that perform the functions specified in one or more flows of the flowchart and/or one or more blocks of the block diagram.

These computer program instructions may also be installed onto a computer or other programmable data processing devices, such that a series of operational steps are executed on the computer or other programmable devices to produce computer-implemented processing, such that the instructions executed on the computer or other programmable devices provide operations for realizing the functions specified in one or more flows of the flowchart and/or one or more blocks of the block diagram.

Finally, it should be noted that the above embodiments are intended only to illustrate the technical solutions of the present invention and not to limit the technical solutions of the present invention.

**Claims**

1. A method for determining voltage support strength of a renewable energy power system in real time by a computer device, comprising:

collecting (101) a bus real-time operating voltage and a collection line current of a monitoring point of the renewable energy power system, wherein the renewable energy power system comprises at least one renewable energy plant, each renewable energy plant comprises at least one renewable energy unit, and the monitoring point is a bus of a renewable energy plant or a terminal bus of a renewable energy unit;
calculating (102) a system's Thevenin equivalent potential of the monitoring point according to the bus real-time operating voltage and the collection line current;
calculating (103) a short circuit ratio of the monitoring point and a critical short circuit ratio of the monitoring point

8

according to a nominal voltage of the monitoring point, the system's Thevenin equivalent potential and the bus real-time operating voltage;

calculating (104) a safety margin of the short circuit ratio of the monitoring point according to the short circuit ratio of the monitoring point and the critical short circuit ratio of the monitoring point; and

determining (105) a strength division result of the voltage support strength of the renewable energy power system according to the safety margin of the short circuit ratio of the monitoring point and a set voltage support strength division criterion;

**characterized in that**:

the voltage support strength division criterion comprises:

in response to $Mgt < K_1$, determining that the renewable energy power system is a system with weak voltage support strength, wherein $K_1$ is a safety margin of the short circuit ratio of the monitoring point determined through calculation when an operating voltage becomes lower than a voltage threshold $K_4$ via low voltage ride through for an operating condition where reactive power compensation of the renewable energy power system is $K_3$, $0 < K_1$, $K_3$, $K_4 < 1$;

in response to $K_1 \leq Mg_t < K_2$, determining that the renewable energy power system is a system with medium voltage support strength, wherein $K_2$ is a safety margin of the short circuit ratio of the monitoring point determined through calculation when renewable energy active power output reaches $K_5$ of transmission capacity of the renewable energy power system for an operating condition where reactive power compensation of the renewable energy power system is $K_3$, $0 < K_2$, $K_5 < 1$; and

in response to $Mg_t \geq K_2$, determining that the renewable energy power system is a system with strong voltage support strength;

wherein Mgt is the safety margin of the short circuit ratio of the monitoring point.

2. The method of claim 1, wherein a calculation formula of the system's Thevenin equivalent potential is:

$$\dot{E}_t = \frac{\dot{U}_t \dot{I}_{t-1} - \dot{U}_{t-1} \dot{I}_t}{\dot{I}_{t-1} - \dot{I}_t}$$

wherein $\dot{U}_t$ is a bus operating voltage of the monitoring point at a moment t, $\dot{U}_{t-1}$ is a bus operating voltage of the monitoring point at a moment t-1, it is a collection line current of the monitoring point at the moment t, $\dot{I}_{t-1}$ is a collection line current of the monitoring point at the moment t-1, and Et is a system's Thevenin equivalent potential of the monitoring point at the moment t.

3. The method of claim 1 or 2, wherein calculation formulas of the short circuit ratio of the monitoring point and the critical short circuit ratio of the monitoring point are:

$$SCR\text{-}U_t = \frac{U_N \cdot E_t}{U_t \cdot \left| \dot{U}_t - \dot{E}_t \right|}$$

$$CSCR\text{-}U_t = \frac{U_N E_t}{U_t^2}$$

wherein SCR-Ut is a short circuit ratio of the monitoring point at a moment t, CSCR-Ut is a critical short circuit ratio of the monitoring point at the moment t, Et is a system's Thevenin equivalent potential of the monitoring point at the moment t, Et is a modulus value of the system's Thevenin equivalent potential of the monitoring point at the moment t, $\dot{U}_t$ is a bus operating voltage of the monitoring point at the moment t, Ut is a modulus value of the bus operating voltage of the monitoring point at the moment t, and $U_N$ is the nominal voltage of the monitoring point, wherein when the monitoring point is a bus of a renewable energy plant, a value of $U_N$ is a rated voltage of a voltage class corresponding to the renewable energy plant, and when the monitoring point is a terminal bus of a renewable energy unit in a renewable energy plant, the value of $U_N$ is a rated voltage of the renewable energy unit.

4. The method of claim 1 or 2, wherein a calculation formula of the safety margin of the short circuit ratio of the monitoring point is:

$$Mg_t = \frac{SCR\text{-}U_t - CSCR\text{-}U_t}{SCR\text{-}U_t} \times 100$$

wherein Mgt is the safety margin of the short circuit ratio of the monitoring point, which is expressed as a percentage and is dimensionless; SCR-Ut is a short circuit ratio of the monitoring point at a moment t, and CSCR-Ut is a critical short circuit ratio of the monitoring point at the moment t.

5. An apparatus (200) for determining voltage support strength of a renewable energy power system in real time, **characterized by**, comprising:

a data collection module (201), configured to collect a bus real-time operating voltage and a collection line current of a monitoring point of the renewable energy power system, wherein the renewable energy power system comprises at least one renewable energy plant, each renewable energy plant comprises at least one renewable energy unit, and the monitoring point is a bus of a renewable energy plant or a terminal bus of a renewable energy unit;

a first calculation module (202), configured to calculate a system's Thevenin equivalent potential of the monitoring point according to the bus real-time operating voltage and the collection line current;

a second calculation module (203), configured to calculate a short circuit ratio of the monitoring point and a critical short circuit ratio of the monitoring point according to a nominal voltage of the monitoring point, the system's Thevenin equivalent potential and the bus real-time operating voltage;

a third calculation module (204), configured to calculate a safety margin of the short circuit ratio of the monitoring point according to the short circuit ratio of the monitoring point and the critical short circuit ratio of the monitoring point; and

a result output module (205), configured to determine a strength division result of the voltage support strength of the renewable energy power system according to the safety margin of the short circuit ratio of the monitoring point and a set voltage support strength division criterion;

**characterized in that**:

the voltage support strength division criterion comprises:

in response to $Mg_t < K_1$, determining that the renewable energy power system is a system with weak voltage support strength, wherein $K_1$ is a safety margin of the short circuit ratio of the monitoring point determined through calculation when an operating voltage becomes lower than a voltage threshold $K_4$ via low voltage ride through for an operating condition where reactive power compensation of the renewable energy power system is $K_3$, $0 < K_1, K_3, K_4 < 1$;

in response to $K_1 \leq Mg_t < K_2$, determining that the renewable energy power system is a system with medium voltage support strength, wherein $K_2$ is a safety margin of the short circuit ratio of the monitoring point determined through calculation when renewable energy active power output reaches $K_5$ of transmission capacity of the renewable energy power system for an operating condition where reactive power compensation of the renewable energy power system is $K_3$, $0 < K_2, K_5 < 1$; and

in response to $Mg_t \geq K_2$, determining that the renewable energy power system is a system with strong voltage support strength;

wherein Mgt is the safety margin of the short circuit ratio of the monitoring point.

6. The apparatus (200) of claim 5, wherein a calculation formula of the system's Thevenin equivalent potential is:

$$\dot{E}_t = \frac{\dot{U}_t \dot{I}_{t-1} - \dot{U}_{t-1} \dot{I}_t}{\dot{I}_{t-1} - \dot{I}_t}$$

wherein $\dot{U}_t$ is a bus operating voltage of the monitoring point at a moment t, $\dot{U}_{t-1}$ is a bus operating voltage of the monitoring point at a moment t-1, it is a collection line current of the monitoring point at the moment t, $\dot{I}_{t-1}$ is a collection line current of the monitoring point at the moment t-1, and Et is a system's Thevenin equivalent potential of the monitoring point at the moment t.

7. The apparatus (200) of claim 5 or 6, wherein calculation formulas of the short circuit ratio of the monitoring point and the critical short circuit ratio of the monitoring point are:

$$\text{SCR-U}_t = \frac{U_N \cdot E_t}{U_t \cdot |\dot{U}_t - \dot{E}_t|}$$

$$\text{CSCR-U}_t = \frac{U_N E_t}{U_t^2}$$

wherein SCR-Ut is a short circuit ratio of the monitoring point at a moment t, CSCR-Ut is a critical short circuit ratio of the monitoring point at the moment t, $\dot{E}_t$ is a system's Thevenin equivalent potential of the monitoring point at the moment t, Et is a modulus value of the system's Thevenin equivalent potential of the monitoring point at the moment t, $\dot{U}_t$ is a bus operating voltage of the monitoring point at the moment t, Ut is a modulus value of the bus operating voltage of the monitoring point at the moment t, and $U_N$ is the nominal voltage of the monitoring point, wherein when the monitoring point is a bus of a renewable energy plant, a value of $U_N$ is a rated voltage of a voltage class corresponding to the renewable energy plant, and when the monitoring point is a terminal bus of a renewable energy unit in a renewable energy plant, the value of $U_N$ is a rated voltage of the renewable energy unit.

8. The apparatus (200) of claim 5 or 6, wherein a calculation formula of the safety margin of the short circuit ratio of the monitoring point is:

$$\text{Mg}_t = \frac{\text{SCR-U}_t - \text{CSCR-U}_t}{\text{SCR-U}_t} \times 100$$

wherein Mgt is the safety margin of the short circuit ratio of the monitoring point, which is expressed as a percentage and is dimensionless; SCR-Ut is a short circuit ratio of the monitoring point at a moment t, and CSCR-Ut is a critical short circuit ratio of the monitoring point at the moment t.

9. A computer-readable storage medium, having stored thereon a computer program that, when executed by at least one processor, performs the method of any one of claims 1 to 4.

10. A computer program product, comprising computer instructions that, when running on a computer device, cause the computer device to perform the method of any one of claims 1 to 4.

**Patentansprüche**

1. Verfahren zum Bestimmen einer Spannungsstützstärke erneuerbaren Energiesystems in Echtzeit durch eine Computervorrichtung, umfassend:

   Erfassen (101) einer Bus-Echtzeitbetriebsspannung und eines Sammelnetzstroms eines Überwachungspunkts des erneuerbaren Energiesystems, wobei das erneuerbare Energiesystem mindestens eine erneuerbare Energieanlage umfasst, wobei jede erneuerbare Energieanlage mindestens eine erneuerbare Energieeinheit umfasst, und der Überwachungspunkt ein Bus einer erneuerbaren Energieanlage oder ein Anschlussbus einer erneuerbaren Energieeinheit ist;
   Berechnen (102) eines Thevenin-Systemäquivalentpotenzials des Überwachungspunkts entsprechend der Bus-Echtzeitbetriebsspannung und dem Sammelnetzstrom;
   Berechnen (103) eines Kurzschlussverhältnisses des Überwachungspunkts und eines kritischen Kurzschlussverhältnisses des Überwachungspunkts entsprechend einer Nennspannung des Überwachungspunkts, dem Thevenin-Systemäquivalentpotenzial und der Bus-Echtzeitbetriebsspannung;
   Berechnen (104) einer Sicherheitsmarge des Kurzschlussverhältnisses des Überwachungspunkts entsprechend dem Kurzschlussverhältnis des Überwachungspunkts und dem kritischen Kurzschlussverhältnis des Überwachungspunkts; und
   Bestimmen (105) eines Stärkeaufteilungsergebnisses der Spannungsstützstärke des erneuerbaren Energiesystems entsprechend der Sicherheitsmarge des Kurzschlussverhältnisses des Überwachungspunkts und einem festgelegten Spannungsstützstärkeaufteilungskriterium;
   **dadurch gekennzeichnet, dass:**
   das Spannungsstützstärkeaufteilungskriterium umfasst:

als Reaktion auf $Mg_t < K_1$, Bestimmen, dass das erneuerbare Energiesystem ein System mit schwacher Spannungsstützstärke ist, wobei $K_1$ eine Sicherheitsmarge des Kurzschlussverhältnisses des Überwachungspunkts ist, der durch Berechnung bestimmt wird, wenn eine Betriebsspannung unter einen Spannungsschwellenwert $K_4$ über Niederspannungsdurchfahrt für eine Betriebsbedingung fällt, wobei die Blindleistungskompensation des erneuerbaren Energiesystems $K_3$ $0 < K_1, K_3, K_4 < 1$ ist;

als Reaktion auf $K_1 \leq Mg_t < K_2$, Bestimmen, dass das erneuerbare Energiesystem ein System mit mittlerer Spannungsstützstärke ist, wobei $K_2$ eine Sicherheitsmarge des Kurzschlussverhältnisses des Überwachungspunkts ist, die durch Berechnung bestimmt wird, wenn die Wirkleistungsabgabe erneuerbarer Energien $K_5$ der Übertragungskapazität des erneuerbaren Energiesystems für eine Betriebsbedingung erreicht, in dem die Blindleistungskompensation des erneuerbaren Energiesystems $K_3$, $0 < K_2, K_5 < 1$ ist; und

als Reaktion auf $Mg_t \geq K_2$, Bestimmen, dass das erneuerbare Energiesystem ein System mit starker Spannungsstützstärke ist;

wobei $Mg_t$ die Sicherheitsmarge des Kurzschlussverhältnisses des Überwachungspunkts ist.

2. Verfahren nach Anspruch 1, wobei eine Berechnungsformel des Thevenin-Systemäquivalentpotenzials lautet:

$$\dot{E}_t = \frac{\dot{U}_t \dot{I}_{t-1} - \dot{U}_{t-1} \dot{I}_t}{\dot{I}_{t-1} - \dot{I}_t}$$

wobei $\dot{U}_t$ eine Busbetriebsspannung des Überwachungspunkts zu einem Zeitpunkt t ist, $\dot{U}_{t-1}$ eine Busbetriebsspannung des Überwachungspunkts zu einem Zeitpunkt t-1 ist, $\dot{I}_t$ ein Sammelnetzstrom des Überwachungspunkts zum Zeitpunkt t ist, $\dot{I}_{t-1}$ ein Sammelnetzstrom des Überwachungspunkts zum Zeitpunkt t-1 ist, und $\dot{E}_t$ ein Thevenin-Systemäquivalentpotenzial des Überwachungspunkts zum Zeitpunkt t ist.

3. Verfahren nach Anspruch 1 oder 2, wobei Berechnungsformeln des Kurzschlussverhältnisses des Überwachungspunkts und des kritischen Kurzschlussverhältnisses des Überwachungspunkts sind:

$$SCR\text{-}U_t = \frac{U_N \cdot E_t}{U_t \cdot |\dot{U}_t - \dot{E}_t|}$$

$$CSCR\text{-}U_t = \frac{U_N E_t}{U_t{}^2}$$

wobei $SCR\text{-}U_t$ ein Kurzschlussverhältnis des Überwachungspunkts zu einem Zeitpunkt t ist, $CSCR\text{-}U_t$ ein kritisches Kurzschlussverhältnis des Überwachungspunkts zum Zeitpunkt t ist, $\dot{E}_t$ ein Thevenin-Systemäquivalentpotenzial des Überwachungspunkts zum Zeitpunkt t ist, $\dot{E}_t$ ein Modulwert des Thevenin-Systemäquivalentpotenzials des Überwachungspunkts zum Zeitpunkt t ist, $\dot{U}_t$ eine Busbetriebsspannung des Überwachungspunkts zum Zeitpunkt t ist, $U_t$ ein Modulwert der Busbetriebsspannung des Überwachungspunkts zum Zeitpunkt t ist, und $U_N$ die Nennspannung des Überwachungspunkts ist, wobei, wenn der Überwachungspunkt ein Bus einer erneuerbaren Energieanlage ist, ein Wert von $U_N$ eine Nennspannung einer Spannungsklasse entsprechend der erneuerbaren Energieanlage ist, und wenn der Überwachungspunkt ein Anschlussbus einer erneuerbaren Energieeinheit in einer erneuerbaren Energieanlage ist, der Wert von $U_N$ eine Nennspannung der erneuerbaren Energieeinheit ist.

4. Verfahren nach Anspruch 1 oder 2, wobei eine Berechnungsformel der Sicherheitsmarge des Kurzschlussverhältnisses des Überwachungspunkts lautet:

$$Mg_t = \frac{SCR\text{-}U_t - CSCR\text{-}U_t}{SCR\text{-}U_t} \times 100$$

wobei $Mg_t$ die Sicherheitsmarge des Kurzschlussverhältnisses des Überwachungspunkts ist, die als Prozentsatz ausgedrückt wird und dimensionslos ist; $SCR\text{-}U_t$ ein Kurzschlussverhältnis des Überwachungspunkts zu einem Zeitpunkt t ist, und $CSCR\text{-}U_t$ ein kritisches Kurzschlussverhältnis des Überwachungspunkts zum Zeitpunkt t ist.

5. Einrichtung (200) zum Bestimmen einer Spannungsstützstärke eines erneuerbaren Energiesystems in Echtzeit, **gekennzeichnet durch,** umfassend:

ein Datenerfassungsmodul (201), das konfiguriert ist, um eine Bus-Echtzeitbetriebsspannung und einen Sammelnetzstrom eines Überwachungspunkts des erneuerbaren Energiesystems zu erfassen, wobei das erneuerbare Energiesystem mindestens eine erneuerbare Energieanlage umfasst, jede erneuerbare Energieanlage mindestens eine erneuerbare Energieeinheit umfasst, und der Überwachungspunkt ein Bus einer erneuerbaren Energieanlage oder ein Anschlussbus einer erneuerbaren Energieeinheit ist;

ein erstes Berechnungsmodul (202), das konfiguriert ist, um ein Thevenin-Systemäquivalentpotenzial des Überwachungspunkts entsprechend der Bus-Echtzeitbetriebsspannung und dem Sammelnetzstrom zu berechnen;

ein zweites Berechnungsmodul (203), das konfiguriert ist, um ein Kurzschlussverhältnis des Überwachungspunkts und ein kritisches Kurzschlussverhältnis des Überwachungspunkts entsprechend einer Nennspannung des Überwachungspunkts, dem Thevenin-Systemäquivalentpotenzial und der Bus-Echtzeitbetriebsspannung zu berechnen;

ein drittes Berechnungsmodul (204), das konfiguriert ist, um eine Sicherheitsmarge des Kurzschlussverhältnisses des Überwachungspunkts entsprechend dem Kurzschlussverhältnis des Überwachungspunkts und dem kritischen Kurzschlussverhältnis des Überwachungspunkts zu berechnen; und

ein Ergebnisausgabemodul (205), das konfiguriert ist, um ein Stärkeaufteilungsergebnis der Spannungsstützstärke des erneuerbaren Energiesystems entsprechend der Sicherheitsmarge des Kurzschlussverhältnisses des Überwachungspunkts und einem festgelegten Spannungsstützstärkeaufteilungskriterium zu bestimmen;

**dadurch gekennzeichnet, dass:**

das Spannungsstützstärkeaufteilungskriterium umfasst:

als Reaktion auf $Mgt < K_1$, Bestimmen, dass das erneuerbare Energiesystem ein System mit schwacher Spannungsstützstärke ist, wobei $K_1$ eine Sicherheitsmarge des Kurzschlussverhältnisses des Überwachungspunkts ist, der durch Berechnung bestimmt wird, wenn eine Betriebsspannung unter einen Spannungsschwellenwert $K_4$ über Niederspannungsdurchfahrt für eine Betriebsbedingung fällt, wobei die Blindleistungskompensation des erneuerbaren Energiesystems $K_3$ $0 < K_1, K_3, K_4 < 1$ ist;

als Reaktion auf $K_1 \leq Mg_t < K_2$, Bestimmen, dass das erneuerbare Energiesystem ein System mit mittlerer Spannungsstützstärke ist, wobei $K_2$ eine Sicherheitsmarge des Kurzschlussverhältnisses des Überwachungspunkts ist, die durch Berechnung bestimmt wird, wenn die Wirkleistungsabgabe erneuerbarer Energien $K_5$ der Übertragungskapazität des erneuerbaren Energiesystems für eine Betriebsbedingung erreicht, in dem die Blindleistungskompensation des erneuerbaren Energiesystems $K_3$, $0 < K_2, K_5 < 1$ ist; und

als Reaktion auf $Mg_t \geq K_2$, Bestimmen, dass das erneuerbare Energiesystem ein System mit starker Spannungsstützstärke ist;

wobei $Mgt$ die Sicherheitsmarge des Kurzschlussverhältnisses des Überwachungspunkts ist.

6. Einrichtung (200) nach Anspruch 5, wobei eine Berechnungsformel für das Thevenin-Systemäquivalentpotenzial lautet:

$$\dot{E}_t = \frac{\dot{U}_t \dot{I}_{t-1} - \dot{U}_{t-1} \dot{I}_t}{\dot{I}_{t-1} - \dot{I}_t}$$

wobei $\dot{U}_t$ eine Busbetriebsspannung des Überwachungspunkts zu einem Zeitpunkt t ist, $\dot{U}_{t-1}$ eine Busbetriebsspannung des Überwachungspunkts zu einem Zeitpunkt t-1 ist, $\dot{I}_t$ ein Sammelnetzstrom des Überwachungspunkts zum Zeitpunkt t ist, $\dot{I}_{t-1}$ ein Sammelnetzstrom des Überwachungspunkts zum Zeitpunkt t-1 ist, und Et ein Thevenin-Systemäquivalentpotenzial des Überwachungspunkts zum Zeitpunkt t ist.

7. Einrichtung (200) nach Anspruch 5 oder 6, wobei Berechnungsformeln des Kurzschlussverhältnisses des Überwachungspunkts und des kritischen Kurzschlussverhältnisses des Überwachungspunkts lauten:

$$SCR\text{-}U_t = \frac{U_N \cdot E_t}{U_t \cdot |\dot{U}_t - \dot{E}_t|}$$

$$\text{CSCR-U}_t = \frac{U_N \dot{E}_t}{U_t^{\,2}}$$

wobei SCR-U$_t$ ein Kurzschlussverhältnis des Überwachungspunkts zu einem Zeitpunkt t ist, CSCR-U$_t$ ein kritisches Kurzschlussverhältnis des Überwachungspunkts zum Zeitpunkt t ist, $\dot{E}_t$ ein Thevenin-Systemäquivalentpotenzial des Überwachungspunkts zum Zeitpunkt t ist, $\dot{E}_t$ ein Modulwert des Thevenin-Systemäquivalentpotenzials des Überwachungspunkts zum Zeitpunkt t ist, $\dot{U}_t$ eine Busbetriebsspannung des Überwachungspunkts zum Zeitpunkt t ist, Ut ein Modulwert der Busbetriebsspannung des Überwachungspunkts zum Zeitpunkt t ist, und U$_N$ die Nennspannung des Überwachungspunkts ist, wobei, wenn der Überwachungspunkt ein Bus einer erneuerbaren Energieanlage ist, ein Wert von U$_N$ eine Nennspannung einer Spannungsklasse entsprechend der erneuerbaren Energieanlage ist, und wenn der Überwachungspunkt ein Anschlussbus einer erneuerbaren Energieeinheit in einer erneuerbaren Energieanlage ist, der Wert von U$_N$ eine Nennspannung der erneuerbaren Energieeinheit ist.

8. Einrichtung (200) nach Anspruch 5 oder 6, wobei eine Berechnungsformel der Sicherheitsmarge des Kurzschlussverhältnisses des Überwachungspunkts lautet:

$$\text{Mg}_t = \frac{\text{SCR-U}_t - \text{CSCR-U}_t}{\text{SCR-U}_t} \times 100$$

wobei Mgt die Sicherheitsmarge des Kurzschlussverhältnisses des Überwachungspunkts ist, die als Prozentsatz ausgedrückt wird und dimensionslos ist; SCR-U$_t$ ein Kurzschlussverhältnis des Überwachungspunkts zu einem Zeitpunkt t ist, und CSCR-U$_t$ ein kritisches Kurzschlussverhältnis des Überwachungspunkts zum Zeitpunkt t ist.

9. Computerlesbares Speichermedium, das ein Computerprogramm darauf gespeichert aufweist, das bei Ausführung durch mindestens einen Prozessor das Verfahren nach einem der Ansprüche 1 bis 4 ausführt.

10. Computerprogrammprodukt, umfassend Computeranweisungen, die, wenn sie auf einer Computervorrichtung laufen, die Computervorrichtung veranlassen, das Verfahren nach einem der Ansprüche 1 bis 4 durchzuführen.

**Revendications**

1. Procédé destiné à déterminer en temps réel une force de soutien de tension d'un système d'alimentation en énergie renouvelable par un dispositif informatique, comprenant :

la collecte (101) d'une tension de fonctionnement en temps réel de barre omnibus et d'un courant de ligne de collecte d'un point de surveillance du système d'alimentation en énergie renouvelable, dans lequel le système d'alimentation en énergie renouvelable comprend au moins une centrale d'énergie renouvelable, chaque centrale d'énergie renouvelable comprend au moins une unité d'énergie renouvelable, et le point de surveillance est une barre omnibus d'une centrale d'énergie renouvelable ou une barre omnibus à bornes d'une unité d'énergie renouvelable ;
le calcul (102) d'un potentiel équivalent de Thevenin du système du point de surveillance en fonction de la tension de fonctionnement en temps réel de barre omnibus et du courant de ligne de collecte ;
le calcul (103) d'un rapport de court-circuit du point de surveillance et d'un rapport de court-circuit critique du point de surveillance en fonction d'une tension nominale du point de surveillance, du potentiel équivalent de Thevenin du système et de la tension de fonctionnement en temps réel de barre omnibus ;
le calcul (104) d'une marge de sécurité du rapport de court-circuit du point de surveillance en fonction du rapport de court-circuit du point de surveillance et du rapport de court-circuit critique du point de surveillance ; et
la détermination (105) d'un résultat de division de force de la force de soutien de tension du système d'alimentation en énergie renouvelable en fonction de la marge de sécurité du rapport de court-circuit du point de surveillance et d'un critère de division de force de soutien de tension défini ;
**caractérisé en ce que :**
le critère de division de force de soutien de tension comprend :

en réponse à Mg$_t$ < K$_1$, la détermination du fait que le système d'alimentation en énergie renouvelable est un système avec une faible force de soutien de tension, dans lequel K$_1$ est une marge de sécurité du rapport de

14

court-circuit du point de surveillance déterminée par calcul lorsqu'une tension de fonctionnement devient inférieure à un seuil de tension $K_4$ par le biais d'une traversée à basse tension pour une condition de fonctionnement où la compensation de puissance réactive du système d'alimentation en énergie renouvelable est $K_3$, $0 < K_1$, $K_3$, $K_4 < 1$ ;

en réponse à $K_1 \leq Mg_t < K_2$, la détermination du fait que le système d'alimentation en énergie renouvelable est un système avec une moyenne force de soutien de tension, dans lequel $K_2$ est une marge de sécurité du rapport de court-circuit du point de surveillance déterminée par calcul lorsqu'une sortie de puissance active d'énergie renouvelable atteint $K_5$ d'une capacité de transport du système d'alimentation en énergie renouvelable pour une condition de fonctionnement où la compensation de puissance réactive du système d'alimentation en énergie renouvelable est $K_3$, $0 < K_2$, $K_5 < 1$ ; et

en réponse à $Mg_t \geq K_2$, la détermination du fait que le système d'alimentation en énergie renouvelable est un système avec une forte force de soutien de tension ;

dans lequel $Mg_t$ est la marge de sécurité du rapport de court-circuit du point de surveillance.

2.  Procédé selon la revendication 1, dans lequel une formule de calcul du potentiel équivalent de Thevenin du système est la suivante :

$$\dot{E}_t = \frac{\dot{U}_t \dot{I}_{t-1} - \dot{U}_{t-1} \dot{I}_t}{\dot{I}_{t-1} - \dot{I}_t}$$

dans lequel $\dot{U}_t$ est une tension de fonctionnement de barre omnibus du point de surveillance à un instant t, $\dot{U}_{t-1}$ est une tension de fonctionnement de barre omnibus du point de surveillance à un instant t-1, $\dot{I}_t$ est un courant de ligne de collecte du point de surveillance à l'instant t, $\dot{I}_{t-1}$ est un courant de ligne de collecte du point de surveillance à l'instant t-1, et $\dot{E}_t$ est un potentiel équivalent de Thevenin du système du point de surveillance à l'instant t.

3.  Procédé selon la revendication 1 ou 2, dans lequel des formules de calcul du rapport de court-circuit du point de surveillance et du rapport de court-circuit critique du point de surveillance sont les suivantes :

$$\text{SCR-U}_t = \frac{U_N \cdot E_t}{U_t \cdot \left| \dot{U}_t - \dot{E}_t \right|}$$

$$\text{CSCR-U}_t = \frac{U_N E_t}{U_t{}^2}$$

dans lequel SCR-Ut est un rapport de court-circuit du point de surveillance à un instant t, CSCR-Ut est un rapport de court-circuit critique du point de surveillance à l'instant t, $\dot{E}_t$ est un potentiel équivalent de Thevenin du système du point de surveillance à l'instant t, Et est une valeur de module du potentiel équivalent de Thevenin du système du point de surveillance à l'instant t, $\dot{U}_t$ est une tension de fonctionnement de barre omnibus du point de surveillance à l'instant t, Ut est une valeur de module de la tension de fonctionnement de barre omnibus du point de surveillance à l'instant t, et $U_N$ est la tension nominale du point de surveillance, dans lequel, lorsque le point de surveillance est une barre omnibus d'une centrale d'énergie renouvelable, une valeur de $U_N$ est une tension nominale d'une classe de tension correspondant à la centrale d'énergie renouvelable, et lorsque le point de surveillance est une barre omnibus à bornes d'une unité d'énergie renouvelable dans une centrale d'énergie renouvelable, la valeur de $U_N$ est une tension nominale de l'unité d'énergie renouvelable.

4.  Procédé selon la revendication 1 ou 2, dans lequel une formule de calcul de la marge de sécurité du rapport de court-circuit du point de surveillance est la suivante :

$$\text{Mg}_t = \frac{\text{SCR-U}_t - \text{CSCR-U}_t}{\text{SCR-U}_t} \times 100$$

dans lequel Mgt est la marge de sécurité du rapport de court-circuit du point de surveillance, qui est exprimée en pourcentage et sans dimension ; SCR-Ut est un rapport de court-circuit du point de surveillance à un instant t, et CSCR-Ut est un rapport de court-circuit critique du point de surveillance à l'instant t.

**5.** Appareil (200) destiné à déterminer en temps réel une force de soutien de tension d'un système d'alimentation en énergie renouvelable,
**caractérisé en ce qu'**il comprend :

un module de collecte de données (201), configuré pour collecter une tension de fonctionnement en temps réel de barre omnibus et un courant de ligne de collecte d'un point de surveillance du système d'alimentation en énergie renouvelable, dans lequel le système d'alimentation en énergie renouvelable comprend au moins une centrale d'énergie renouvelable, chaque centrale d'énergie renouvelable comprend au moins une unité d'énergie renouvelable, et le point de surveillance est une barre omnibus d'une centrale d'énergie renouvelable ou une barre omnibus à bornes d'une unité d'énergie renouvelable ;
un premier module de calcul (202), configuré pour calculer un potentiel équivalent de Thevenin du système du point de surveillance en fonction de la tension de fonctionnement en temps réel de barre omnibus et du courant de ligne de collecte ;
un deuxième module de calcul (203), configuré pour calculer un rapport de court-circuit du point de surveillance et un rapport de court-circuit critique du point de surveillance en fonction d'une tension nominale du point de surveillance, du potentiel équivalent de Thevenin du système et de la tension de fonctionnement en temps réel de barre omnibus ;
un troisième module de calcul (204), configuré pour calculer une marge de sécurité du rapport de court-circuit du point de surveillance en fonction du rapport de court-circuit du point de surveillance et du rapport de court-circuit critique du point de surveillance ; et
un module de sortie de résultat (205), configuré pour déterminer un résultat de division de force de la force de soutien de tension du système d'alimentation en énergie renouvelable en fonction de la marge de sécurité du rapport de court-circuit du point de surveillance et d'un critère de division de force de soutien de tension défini ;
**caractérisé en ce que :**

le critère de division de force de soutien de tension comprend :
en réponse à $Mg_t < K_1$, la détermination du fait que le système d'alimentation en énergie renouvelable est un système avec une faible force de soutien de tension, dans lequel $K_1$ est une marge de sécurité du rapport de court-circuit du point de surveillance déterminée par calcul lorsqu'une tension de fonctionnement devient inférieure à un seuil de tension $K_4$ par le biais d'une traversée à basse tension pour une condition de fonctionnement où la compensation de puissance réactive du système d'alimentation en énergie renouvelable est $K_3$, $0 < K_1$, $K_3$, $K_4 < 1$ ;
en réponse à $K_1 \leq Mg_t < K_2$, la détermination du fait que le système d'alimentation en énergie renouvelable est un système avec une moyenne force de soutien de tension, dans lequel $K_2$ est une marge de sécurité du rapport de court-circuit du point de surveillance déterminée par calcul lorsqu'une sortie de puissance active d'énergie renouvelable atteint $K_5$ d'une capacité de transport du système d'alimentation en énergie renouvelable pour une condition de fonctionnement où la compensation de puissance réactive du système d'alimentation en énergie renouvelable est $K_3$, $0 < K_2$, $K_5 < 1$ ; et
en réponse à $Mg_t \geq K_2$, la détermination du fait que le système d'alimentation en énergie renouvelable est un système avec une forte force de soutien de tension ;
dans lequel $Mg_t$ est la marge de sécurité du rapport de court-circuit du point de surveillance.

**6.** Appareil (200) selon la revendication 5, dans lequel une formule de calcul du potentiel équivalent de Thevenin du système est la suivante :

$$\dot{E}_t = \frac{\dot{U}_t \dot{I}_{t-1} - \dot{U}_{t-1} \dot{I}_t}{\dot{I}_{t-1} - \dot{I}_t}$$

dans lequel $\dot{U}_t$ est une tension de fonctionnement de barre omnibus du point de surveillance à un instant t, $\dot{U}_{t-1}$ est une tension de fonctionnement de barre omnibus du point de surveillance à un instant t-1, $\dot{I}_t$ est un courant de ligne de collecte du point de surveillance à l'instant t, $\dot{I}_{t-1}$ est un courant de ligne de collecte du point de surveillance à l'instant t-1, et $\dot{E}_t$ est un potentiel équivalent de Thevenin du système du point de surveillance à l'instant t.

**7.** Appareil (200) selon la revendication 5 ou 6, dans lequel des formules de calcul du rapport de court-circuit du point de surveillance et du rapport de court-circuit critique du point de surveillance sont les suivantes :

$$\text{SCR-U}_t = \frac{U_N \cdot E_t}{U_t \cdot \left| \dot{U}_t - \dot{E}_t \right|}$$

$$\text{CSCR-U}_t = \frac{U_N E_t}{U_t{}^2}$$

dans lequel SCR-Ut est un rapport de court-circuit du point de surveillance à un instant t, CSCR-Ut est un rapport de court-circuit critique du point de surveillance à l'instant t, $\dot{E}_t$ est un potentiel équivalent de Thevenin du système du point de surveillance à l'instant t, Et est une valeur de module du potentiel équivalent de Thevenin du système du point de surveillance à l'instant t, $\dot{U}_t$ est une tension de fonctionnement de barre omnibus du point de surveillance à l'instant t, Ut est une valeur de module de la tension de fonctionnement de barre omnibus du point de surveillance à l'instant t, et $U_N$ est la tension nominale du point de surveillance, dans lequel, lorsque le point de surveillance est une barre omnibus d'une centrale d'énergie renouvelable, une valeur de $U_N$ est une tension nominale d'une classe de tension correspondant à la centrale d'énergie renouvelable, et lorsque le point de surveillance est une barre omnibus à bornes d'une unité d'énergie renouvelable dans une centrale d'énergie renouvelable, la valeur de $U_N$ est une tension nominale de l'unité d'énergie renouvelable.

8. Appareil (200) selon la revendication 5 ou 6, dans lequel une formule de calcul de la marge de sécurité du rapport de court-circuit du point de surveillance est la suivante :

$$\text{Mg}_t = \frac{\text{SCR-U}_t - \text{CSCR-U}_t}{\text{SCR-U}_t} \times 100$$

dans lequel Mgt est la marge de sécurité du rapport de court-circuit du point de surveillance, qui est exprimée en pourcentage et sans dimension ; SCR-Ut est un rapport de court-circuit du point de surveillance à un instant t, et CSCR-Ut est un rapport de court-circuit critique du point de surveillance à l'instant t.

9. Support de stockage lisible par ordinateur sur lequel est stocké un programme informatique qui, lorsqu'il est exécuté par au moins un processeur, effectue le procédé selon l'une quelconque des revendications 1 à 4.

10. Produit de programme informatique comprenant des instructions informatiques qui, lorsqu'elles sont exécutées sur un dispositif informatique, amènent le dispositif informatique à effectuer le procédé selon l'une quelconque des revendications 1 à 4.

101

Collect a bus real-time operating voltage and a collection line current of a monitoring point of the renewable energy power system

102

Calculate a system's Thevenin equivalent potential of the monitoring point according to the bus real-time operating voltage and the collection line current

103

Calculate a short circuit ratio of the monitoring point and a critical short circuit ratio of the monitoring point according to a nominal voltage of the monitoring point, the system's Thevenin equivalent potential and the bus real-time operating voltage

104

Calculate a safety margin of the short circuit ratio of the monitoring point according to the short circuit ratio of the monitoring point and the critical short circuit ratio of the monitoring point

105

Determine a strength division result of the voltage support strength of the renewable energy power system according to the safety margin of the short circuit ratio of the monitoring point and a set voltage support strength division criterion

# FIG. 1

200

201
Data collection module

202
First calculation module

203
Second calculation module

204
Third calculation module

205
Result output module

**FIG. 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 115829264 A

- CN 113904375 A